# EUROPÄISCHE PATENTSCHRIFT

(11) **EP 1 388 641 B1**
(45) Veröffentlichungstag und Bekanntmachung des Hinweises auf die Patenterteilung: **30.05.2018**
(21) Anmeldenummer: 03102428.4
(22) Anmeldetag: 05.08.2003
(51) Int. Cl.: E21B 10/56

(54) **Hartstoffeinsatz mit polykristalliner Diamantschicht**
Hard insert with PDC layer
Plaquette de coupe avec couche de diamant polycrystalline

(30) Priorität: 08.08.2002 DE 10236483
(43) Veröffentlichungstag der Anmeldung: 11.02.2004
(73) Patentinhaber: HILTI Aktiengesellschaft, 9494 Schaan (LI)
(72) Erfinder: Moseley, Steven, 6800, Feldkirch-Tisis (AT)
(74) Vertreter: Hilti Aktiengesellschaft Corporate Intellectual Property

(56) Entgegenhaltungen:
- EP-A- 0 154 936
- EP-A- 0 628 369
- WO-A-93/25795
- US-A- 5 533 582
- US-A- 6 044 920

## Beschreibung

Die Erfindung bezeichnet einen Hartstoffeinsatz mit einer flachen polykristallinen Diamantschicht für ein Werkzeug, insbesondere ein Bohr- oder Meisselwerkzeug zur Bearbeitung von Gestein.

Üblicherweise werden Hartstoffeinsätze mit einer flachen polykristallinen Diamantschicht (PKD) aus einem PKD-Schichtrohling herausgetrennt, bspw. durch Drahterrodieren. Da der Materialausnutzung ein hoher Stellenwert zukommt, wird der PKD-Schichtrohling mosaikartig in mehrere flache Hartstoffeinsätze zerlegt, wobei scharfe Ecken entstehen.

Nach der EP 0 628 369 A werden zur Herstellung von Hartstoffeinsätzen für ein Werkzeug aus einem PKD-Schichtrohling flache Hartstoffeinsätze mosaikartig herausgetrennt, wobei scharfe Ecken entstehen, die zu Spannungsüberhöhungen führen und rissauslösend wirken.

Nach der US 5,601,477 ist bei einem vollkreisförmigen Hartstoffeinsatz mit einer flachen polykristallinen Diamantschicht (PKD) diese quer zur Schichtebene abgerundet, wodurch die Schneidkante gezielt abgestumpft wird. Aus einem PKD-Schichtrohiing herausgetrennte segmentartige Hartstoffeinsätze werden nicht verwendet.

Nach der US 5,533,582 weist ein segmentartiger halbkreisförmiger Hartstoffeinsatz für ein Werkzeug eine flache polykristalline Diamantschicht auf, die in der Schichtebene eine Hauptschneide mit einem Radius R und eine gegenüberliegende gerade Ansatzkante aufweist. Im Übergangsbereich der Hauptschneide zur Ansatzkante entstehen scharfe Ecken, die zu Spannungsüberhöhungen führen und rissauslösend wirken.

Die EP 0 154 936 A zeigt einen segmentartigen Hartstoffeinsatz für ein Werkzeug, der eine flache, polykristalline Diamantschicht aufweist. Die Diamantschicht weist in der Schichtebene eine Hauptschneide sowie eine gegenüberliegende, gerade Ansatzkante auf, wobei die Hauptschneide zumindest abschnittsweise als Kreisabschnitt mit einem Radius ausgebildet ist. Der Hartstoffeinsatz weist zwischen der Hauptschneide und der Ansatzkante mindestens einen Übergangsbereich auf.

Die US 6,044,920 A zeigt einen Hartstoffeinsatz für ein Werkzeug gemäß dem Oberbegriff des Anspruchs 1, welcher segmentartig ausgebildet ist und eine flache, polykristalline Diamantschicht aufweist. Die Diamantschicht weist in der Schichtebene eine Hauptschneide und eine gegenüberliegende, gerade Ansatzkante auf. Die Hauptschneide ist zumindest stückweise kreisförmig ausgebildet und umfasst einen ersten Kreisabschnitt mit einem ersten Radius und einen zweiten Kreisabschnitt mit einem zweiten Radius. Zwischen der Hauptschneide und der Ansatzkante weist der Hartstoffeinsatz jeweils einen Übergangsbereich auf, wobei der minimale Krümmungsradius der Übergangsbereiche grösser als R/20 ist.

Die Aufgabe der Erfindung besteht in der Erhöhung der Belastbarkeit eines segmentartigen Hartstoffeinsatzes mit einer flachen, polykristallinen Diamantschicht.

Die Aufgabe wird im Wesentlichen durch die Merkmale des unabhängigen Anspruchs gelöst. Vorteilhafte Weiterbildungen ergeben sich aus den abhängigen Ansprüchen.

Im Wesentlichen weist ein segmentartiger Hartstoffeinsatz für ein Werkzeug mit einer flachen, polykristallinen Diamantschicht in der Schichtebene eine Hauptschneide, die zumindest stückweise einen Radius R aufweist, und eine der Hauptschneide gegenüberliegende, zumindest stückweise gerade Ansatzkante auf, wobei in einem Übergangsbereich der Hauptschneide zur Ansatzkante der kleinste Krümmungsradius K grösser als R/20 und kleiner als R/5 ist. Der Hartstoffeinsatz ist dadurch gekennzeichnet, dass die Hauptschneide diskontinuierlich mit konvex und konkav geformten Übergangsbereichen innerhalb der Hauptschneide ausgebildet ist.

Durch die im Übergangsbereich der Hauptschneide zur Ansatzkante beim kleinsten Krümmungsradius K mit K > R/20 bestimmte maximale Krümmung werden scharfe Ecken in der Schichtebene vermieden, wodurch Spannungsüberhöhungen durch Punktlasten und die Risswahrscheinlichkeit in der Lötschicht zwischen dem Werkzeug und der Ansatzkante reduziert werden. Somit steigt die Belastbarkeit eines Hartstoffeinsatzes. Die konvex und konkav geformten Übergangsbereiche innerhalb der diskontinuierlichen Hauptschneide führen zu einem guten Anbohrverhalten des Hartstoffeinsatzes und einer hohen Belastbarkeit des Hartstoffeinsatzes durch eine sichere Anbindung an das Werkzeug. Durch die beiden Übergangsbereiche weist der Hartstoffeinsatz eine breite Ansatzkante zur Anbindung auf und im Bereich der Hauptschneide führt ein kleiner Krümmungsradius zu einem guten Anbohrverhalten.

Vorteilhaft liegt bezüglich des Radius R eines zumindest segmentweise kreisförmigen PKD-Schichtrohlings sowie zumindest Teilen der Hauptschneide die Weite W der Ansatzkante in einem Bereich von R/2 bis 2R, wodurch die Hauptschneide aus einem Bogenstück des Umfangs eines zumindest segmentweise kreisförmigen PKD-Schichtrohlings des Radius R und die Ansatzkante durch einen technologisch wirtschaftlichen, im Wesentlichen geradlinigen Trennschnitt durch den PKD-Schichtrohling gebildet werden.

Vorteilhaft liegt bezüglich der Weite W die normal zur Ansatzkante gemessene Höhe H des Hartstoffeinsatzes in einem Bereich von W/2 bis 3W/2, wodurch sich eine biegefeste, kompakte Form ergibt.

Vorteilhaft befindet sich ein bspw. durch Drahterrodieren entstehender Grat, weiter vorteilhaft in einem mittleren Bereich angeordnet, an der Anschlagkante, weil an der am Werkzeug angelöteten Ansatzkante dieser Grat nur geringsten Beanspruchungen ausgesetzt ist.

Der Übergangsbereich geringer Krümmung wird vorteilhaft nach der Herstellung des PKD-Schichtrohlings und der Abtrennung eines segmentartigen Hartstoffeinsatzes in einem nachfolgenden Schritt durch eine Nachbearbeitung hergestellt, weiter vorteilhaft durch Schleifen, Laserschneiden oder Drahterrodieren.

Die Erfindung wird bezüglich eines vorteilhaften Ausführungsbeispiels näher erläutert mit:

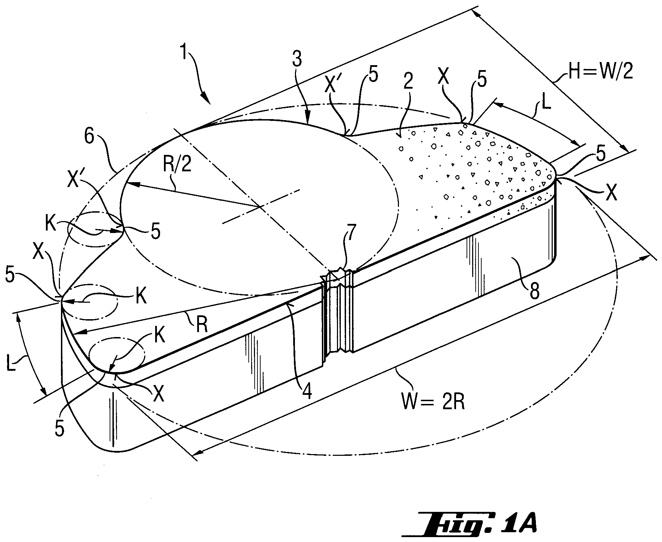

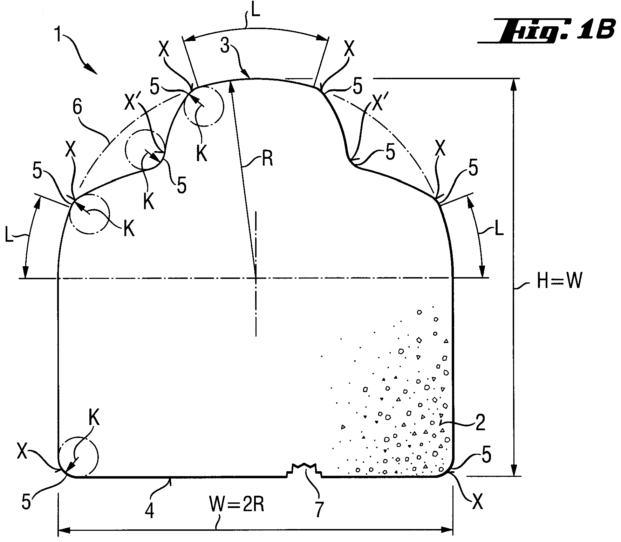

Fig. 1A, 1B als Hartstoffeinsatz
Nach den Fig. 1A, Fig. 1B weist ein segmentartig ausgebildeter Hartstoffeinsatz 1 für ein nicht dargestelltes Werkzeug eine flache, polykristalline Diamantschicht 2 auf. Einer diskontinuierlichen Hauptschneide 3 mit einem in der Schichtebene zumindest stückweisen Radius R gegenüber ist in einer Höhe H eine gerade Ansatzkante 4 einer Länge W = 2R angeordnet. Die in der Schichtebene konvex und konkav geformten Übergangsbereiche X, X' innerhalb der diskontinuierlichen Hauptschneide 3 sowie die Übergangsbereiche X der Hauptschneide 3 zur Ansatzkante 4 sind mit abgerundeten Ecken 5 ausgebildet, deren Krümmungsradius K = R/10 ist. Von dem gestrichelt angedeuteten, in Fig. 1A kreisförmigen bzw. in Fig. 1B segmentweise kreisförmigen, PKD-Schichtrohling 6 mit dem Radius R sind ohne Nachbearbeitung einzelne Bogenlängen L stückweise als Teil der Hauptschneide 3 genutzt, wobei die Summe der einzelnen Bogenlängen L im Bereich von 0,3*πR bis 0,9*πR der sich über einen Halbkreisbogen πR erstreckenden Hauptschneide 3 liegt. Bei der Fig. 1A bildet der nachgearbeitete mittlere Teil der Hauptschneide 3 zudem einen Schneidenradius R/2 aus. Ein durch Drahterrodieren entstandener konkaver Grat 7 ist in einem mittleren Bereich +/- W/4 von der Mitte an der Ansatzkante 4 angeordnet.

## Patentansprüche

1. Hartstoffeinsatz für ein Werkzeug, welcher segmentartig ausgebildet ist und eine flache, polykristalline Diamantschicht (2) aufweist, welche in der Schichtebene eine Hauptschneide (3), die zumindest stückweise einen Radius R aufweist, und eine der Hauptschneide (3) gegenüberliegende, zumindest stückweise gerade Ansatzkante (4) aufweist, wobei in einem Übergangsbereich (X, X') der Hauptschneide (3) zur Ansatzkante (4) der minimale Krümmungsradius K grösser als R/20 ist, **dadurch gekennzeichnet, dass** die Hauptschneide (3) diskontinuierlich mit konvexen und konkav geformten Übergangsbereichen (X, X') innerhalb der Hauptschneide (3) ausgebildet ist.

2. Hartstoffeinsatz nach Anspruch 1, **dadurch gekennzeichnet, dass** bezüglich des Radius R eines zumindest segmentweise kreisförmigen PKD-Schichtrohlings (6) sowie zumindest Teilen der Hauptschneide (3) die Weite W der Ansatzkante in einem Bereich von R/2 bis 2R liegt.

3. Hartstoffeinsatz nach Anspruch 1 oder 2, **dadurch gekennzeichnet, dass** bezüglich der Weite W die normal zur Ansatzkante (4) gemessene Höhe H in einem Bereich von W/2 bis 3W/2 liegt.

4. Hartstoffeinsatz nach einem der bisherigen Ansprüche, **dadurch gekennzeichnet, dass** ein Grat (7) an der Ansatzkante (4) angeordnet ist und sich optional in einem mittleren Bereich befindet.

## Claims

1. Hard material insert for a tool, which insert is configured in the form of a segment and comprises a flat polycrystalline diamond layer (2) which has, in the plane of the layer (2), a main cutting edge (3) having, at least in some sections, a radius R, and having a base edge (4) which is disposed opposite the main cutting edge (3) and is rectilinear at least in some sections, wherein, in a transitional region (X, X') from the main cutting edge (3) to the base edge (4), the minimum radius of curvature K is greater than R/20, **characterised in that** the main cutting edge (3) is configured discontinuously with convex and concave transitional regions (X, X') within the main cutting edge (3).

2. Hard material insert according to Claim 1, **characterised in that,** in relation to the radius R of an at least segmentally circular blank (6) of the polycrystalline diamond layer, and at least to portions of the main cutting edge (3), the width W of the base edge is in a range from R/2 to 2R.

3. Hard material insert according to Claim 1 or 2, **characterised in that,** in relation to the width W, the height H measured normally to the base edge (4) is in a range from W/2 to 3W/2.

4. Hard material insert according to any one of the preceding claims, **characterised in that** a ridge (7) is arranged on the base edge (4) and optionally is located in a central region.

## Revendications

1. Insert en matériau dur pour un outil configuré de manière segmentée et comportant une couche de diamant polycristalline plane (2), laquelle couche comporte un tranchant principal (3) dans le plan de la couche ayant un rayon R au moins dans certaines parties, et une arête de contact (4) linéaire au moins dans certaines parties, opposée au tranchant principal (3), dans lequel dans une zone de transition (X, X') du tranchant principal (3) par rapport à l'arête de contact (4), le rayon de courbure minimal K est supérieur à R/20, **caractérisé en ce que** le tranchant principal (3) est formé de manière discontinue avec des zones de transition (X, X') formées convexes et concaves à l'intérieur du tranchant principal (3).

2. Insert en matériau dur selon la revendication 1, **caractérisé en ce que** la largeur W de l'arête de contact est dans une plage de R/2 à 2R par rapport au rayon R d'une ébauche de couche de diamant polycristalline (PKD) circulaire au moins dans certains segments (6) et au moins des parties du tranchant principal (3).

3. Insert en matériau dur selon la revendication 1 ou 2, **caractérisé en ce que** la hauteur H mesurée perpendiculairement à l'arête de contact (4) est dans une plage de W/2 à 3W/2 par rapport à la largeur W.

4. Insert en matériau dur selon l'une des revendications précédentes, **caractérisé en ce qu'**une bavure (7) est agencée sur l'arête de contact (4) et se situe facultativement dans une zone centrale.
